# EUROPEAN PATENT APPLICATION

(11) **EP 4 531 197 A1**
(43) Date of publication of application: **02.04.2025**
(21) Application number: 24752338.4
(22) Date of filing: 07.08.2024
(51) Int. Cl.: H01M 50/531, H01M 50/536, H01M 50/184, H01M 50/19, H01M 50/284, B23K 20/10, H01M 50/247, H01M 10/42

(54) **ELECTRONIC DEVICE INCLUDING BATTERY**

(30) Priority: 07.08.2023 KR 20230102996; 05.10.2023 KR 20230132439
(71) Applicant: Samsung Electronics Co., Ltd, Suwon-si, Gyeonggi-do 16677 (KR)
(72) Inventor: KIM, Shihyun, Yeongtong-gu, Suwon-si Gyeonggi-do 16677 (KR); PARK, Seonyoung, Yeongtong-gu, Suwon-si Gyeonggi-do 16677 (KR); JANG, Kiyoun, Yeongtong-gu, Suwon-si Gyeonggi-do 16677 (KR); CHU, Jungho, Yeongtong-gu, Suwon-si Gyeonggi-do 16677 (KR)
(74) Representative: Appleyard Lees IP LLP
(86) International application number: PCT/KR2024/011699
(87) International publication number: WO 2025/033982

(57) **Abstract**

Disclosed is an electronic device according to an embodiment of the present disclosure. The electronic device may include a protection circuit module, and a battery electrically connected to the protection circuit module, wherein the battery may include an electrode assembly including a plurality of cathode plates, a plurality of anode plates, and a separator disposed in at least a portion between the cathode plates and the anode plates, and an exterior material surrounding at least a portion of the electrode assembly, wherein each of the plurality of cathode plates and each of the plurality of anode plates may include an electrode plate portion including a base layer and a polar layer, and a connection portion extending from the base layer of the electrode plate portion, and wherein the connection portion may include a first area disposed to overlap an end of the exterior material at least in part to be in contact with the polar layer, and including a coating layer formed on one surface of the base layer, and a second area including the base layer extending from the first area, and electrically connected to the protection circuit module.

## Description

### [Technical Field]

The present disclosure relates to an electronic device that includes a battery.

### [Background Art]

A battery included in an electronic device (e.g., a portable electronic device) may include an electrode assembly including an anode plate and a cathode plate, and an exterior material (e.g., a pouch) surrounding an exterior of the electrode assembly.

The battery may be coupled to a separate constituent element (e.g., a lead tab) at an end to be electrically connected to an external constituent element (e.g., a protection circuit module). For example, an anode base part and a cathode base part of the battery may be welded and coupled to the lead tab. A lead tab coupled to the battery may electrically connect the battery to an external constituent element.

The information described above may be provided as the related art for the purpose of enhancing the understanding of the present document. None of the above-mentioned may be asserted as the prior art related to the present document, or used to determine the prior art.

### [Disclosure of Invention]

When a battery is coupled to a lead tab, it may be difficult to form a thickness of the battery to be thin because an area for a welding portion needs to be secured for welding the battery and the lead tab.

When the welding portion where the battery and the lead tab are coupled is positioned inside an exterior material, a length of a cathode plate and a length of an anode plate may be reduced to secure an area for the welding portion, thereby reducing the energy density of the battery.

When the welding portion where the battery and the lead tab are coupled is formed without any bending, a width of a sealing portion for sealing the exterior material may increase, thereby reducing the energy density of the battery.

When a portion of the welding portion where the battery and the lead tab are coupled is formed in a bent form, it may be difficult to form the thickness of the battery to be thin because a space needs to be secured to implement a bent portion.

When a portion of the welding portion where the battery and the lead tab are coupled is formed in a bent form, there may be a risk to the stability of the battery due to the inconsistency in the formation of the bent shape.

When the welding portion where the battery and the lead tab are coupled is positioned inside an exterior material, foreign substances resulting from a welding process may occur inside the exterior material.

There is provided an electronic device according to an embodiment of the present disclosure. The electronic device includes a protection circuit module, and a battery electrically connected to the protection circuit module, in which the battery includes an electrode assembly including a plurality of cathode plates, a plurality of anode plates, and a separator disposed in at least a portion between the cathode plates and the anode plates, and an exterior material surrounding at least a portion of the electrode assembly, in which each of the plurality of cathode plates and each of the plurality of anode plates include an electrode plate portion including a base layer and a polar layer, and a connection portion extending from the base layer of the electrode plate portion, and in which the connection portion includes a first area disposed to overlap an end of the exterior material at least in part to be in contact with the polar layer, and including a coating layer formed on one surface of the base layer, and a second area including the base layer extending from the first area, and electrically connected to the protection circuit module.

There is provided a battery according to an embodiment of the present disclosure. The battery includes an electrode assembly including a plurality of cathode plates and a plurality of anode plates, and a pouch surrounding at least a portion of the electrode assembly, in which each of the cathode plates and each of the anode plates are separated by a separator and alternately stacked relative to each other, in which each of the plurality of cathode plates and each of the plurality of anode plates include an electrode plate portion, including a base layer and a polar layer, and a connection portion extending from the base layer of the electrode plate portion, and in which the connection portion includes a first area including a coating layer formed on one surface of that base layer to be in contact with the polar layer, and disposed to overlap at least a portion of an end area of the pouch, and a second area extending from the first area and electrically connected to a protection circuit module.

There is provided an electronic device according to an embodiment of the present disclosure. The electronic device includes a protection circuit module and a battery electrically connected to the protection circuit module, in which the battery includes an electrode assembly including a plurality of cathode plates and a plurality of anode plates, and a pouch surrounding at least a portion of the electrode assembly, in which each of the cathode plates and each of the anode plates is separated by a separator and alternately stacked relative to each other, in which each of the plurality of cathode plates and each of the plurality of anode plates include an electrode plate portion, including a base layer and a polar layer, and a connection portion extending from the base layer of the electrode plate portion, and in which the connection portion includes a first area including a coating layer formed on one surface of that base layer to be in contact with that polar layer, and disposed to overlap at least a portion of an end area of the pouch, and a second area extending from the first area and electrically connected to the protection circuit module.

A battery according to an embodiment of the present disclosure may include a connection portion that includes a coating layer at least in part so that the battery can be electrically connected to an external constituent element without being coupled to a separate lead tab.

A battery according to an embodiment of the present disclosure does not require a space for welding inside an exterior material, which enables the battery to be formed relatively thin.

A battery according to an embodiment of the present disclosure does not require a space inside an exterior material to implement a bent portion, thereby increasing the energy density of the battery.

A battery according to an embodiment of the present disclosure may not include a bent shape, which can reduce a risk to the stability of the battery.

A battery according to an embodiment of the present disclosure may be weldable after sealing of an exterior material, thereby preventing or reducing the occurrence of foreign substances inside the exterior material through welding.

A battery according to an embodiment of the present disclosure may include a coating layer on a portion of a connection portion and thus may not include a separate constitution for insulation (e.g., insulating tape, insulating coating).

A battery according to an embodiment of the present disclosure may include a casting polypropylene (CPP) coating layer on the end, so that sliding of an electrode active material from the end of the battery can be prevented or reduced.

### [Brief Description of Drawings]

FIG. 1 is a block diagram of an electronic device in a network environment according to an embodiment.
FIG. 2 is a view illustrating a coating process of a base plate according to an embodiment of the present disclosure.
FIG. 3 is a view illustrating the base plate on which a polar material is coated according to an embodiment of the present disclosure.
FIG. 4 is a view illustrating a mother plate that includes a coating layer according to an embodiment of the present disclosure.
FIG. 5A and FIG. 5B are views illustrating a cathode plate according to an embodiment of the present disclosure.
FIG. 6A and FIG. 6B are views illustrating an anode plate according to an embodiment of the present disclosure.
FIG. 7 is a view illustrating an electrode assembly according to an embodiment of the present disclosure.
FIG. 8 is a view illustrating a coating film according to an embodiment of the present disclosure.
FIG. 9A and FIG. 9B are views illustrating a battery according to an embodiment of the present disclosure.
FIG. 10A and FIG. 10B are views illustrating the electrode assembly according to an embodiment of the present disclosure.
FIG. 11A and FIG. 11B are views illustrating a battery according to an embodiment of the present disclosure.
FIG. 12 is a view illustrating an electronic device according to an embodiment of the present disclosure.

### [Mode for the Invention]

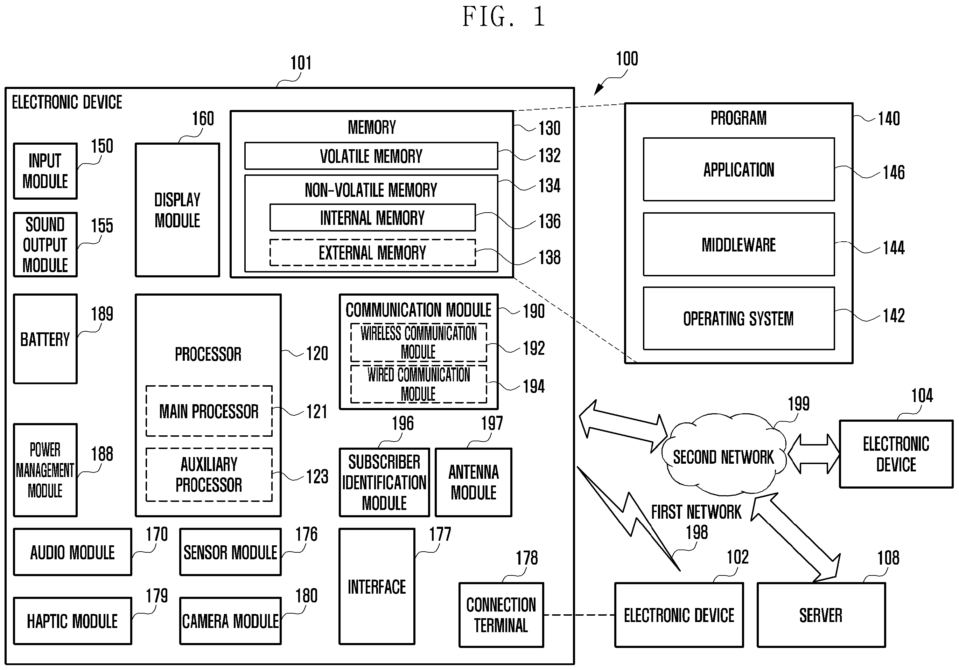

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

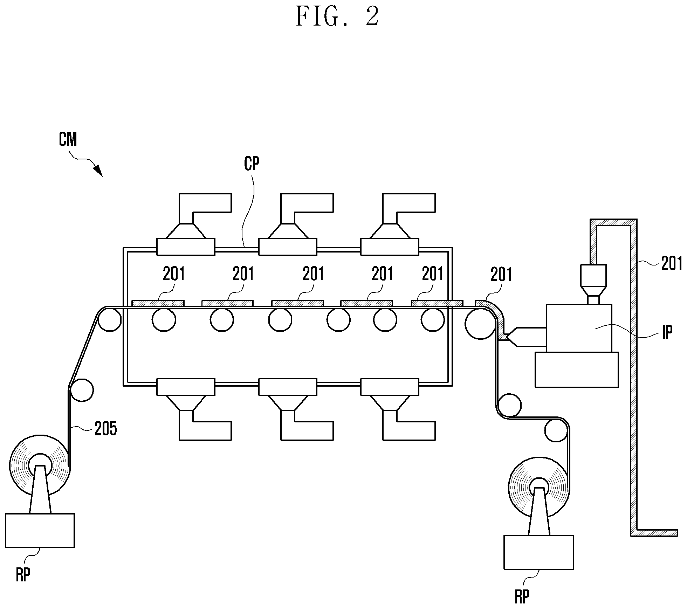

FIG. 2 is a view illustrating a coating process of a base plate 205 according to an embodiment of the present disclosure.

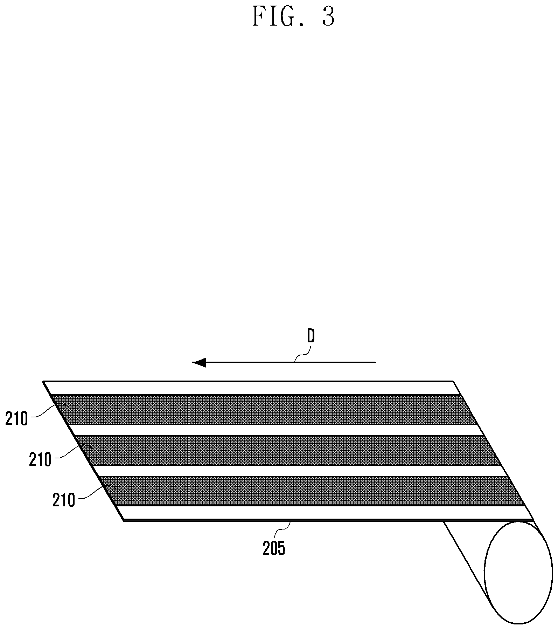

FIG. 3 is a view illustrating the base plate 205 on which a polar material 201 is coated according to an embodiment of the present disclosure.

With reference to FIG. 2 and FIG. 3, the polar material 201 may be coated on the base plate 205 using a coating device CM.

With reference to FIG. 2, the coating device CM may include a coating part CP, a transportation part RP, and/or a material input part IP.

In an embodiment, the polar material 201 is introduced into the coating device CM through the material input part IP. In an embodiment, the polar material 201 is an electrode active material having a cathode or an anode.

In an embodiment, the base plate 205 ismoved by the transportation part RP. The transportation part RP may include a rotation device to move the base plate 205 in a predetermined direction.

In an embodiment, the polar material 201 iscoated on one surface of the base plate 205 in the coating part CP of the coating device CM. For example, the polar material 201 introduced through the material input part IP iscoated on one surface of the base plate 205 in the coating part CP. Since the base plate 205 is moved in a predetermined direction by the transportation part RP, the polar material 201 iscoated on one surface of the base plate 205 along a coating direction D.

With reference to FIGS. 2 and 3, the polar material 201 coated on the base plate 205 according to an embodiment to form a polar layer 210. For example, the polar material 201 is coated on one surface of the base plate 205 along the coating direction D, and the polar layer 210 is formed.

In an embodiment, the polar layer 210 extends from one surface of the base plate 205 in a direction substantially parallel to a direction in which the base plate 205 extends. For example, the coating direction D in which the polar layer 210 extends is substantially the same direction as the direction in which the base plate 205 extends.

In an embodiment, a plurality of polar layers 210 is formed on one surface of the base plate 205. The plurality of polar layers 210 is formed spaced apart from each other in a direction substantially perpendicular to the direction in which the polar layer 210 extends.

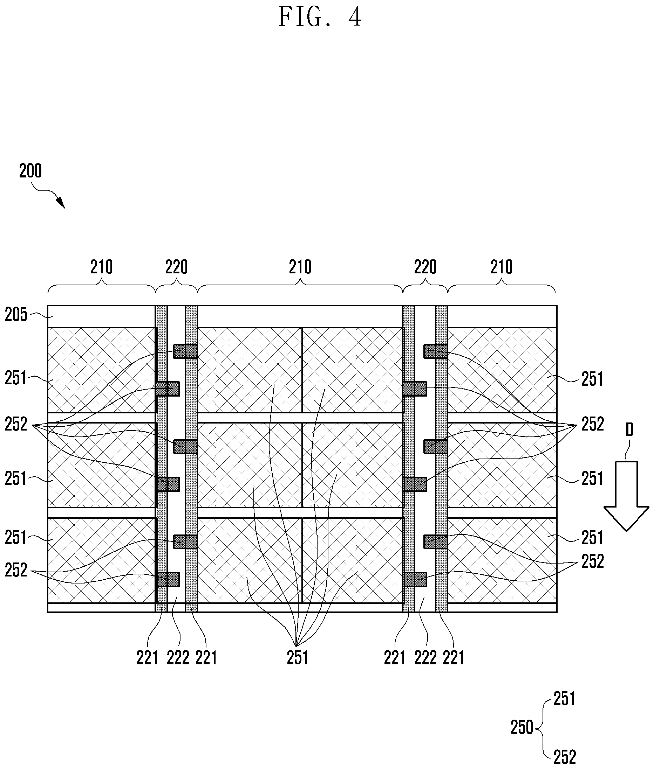

FIG. 4 is a view illustrating a mother plate 200 that includes a coating layer 221 according to an embodiment of the present disclosure.

With reference to FIG. 4, the mother plate 200 according to an embodiment includes the base plate 205, the polar layer 210, and/or an intermediate layer 220. The polar layer 210 means a portion of the base plate 205 that is coated with the polar material 201. The intermediate layer 220 means a portion of the base plate 205 that is positioned between the two polar layers 210.

With reference to FIG. 4, the intermediate layer 220 according to an embodiment includes the coating layer 221 and/or a non-coating layer 222.

In an embodiment, the coating layer 221 extends from a side surface of the polar layer 210 in the direction substantially parallel to the direction in which the polar layer 210 extends.

In an embodiment, the coating layer 221 includes a resin material. For example, the coating layer 221 may include a casting polypropylene (CPP) film.

In an embodiment, the non-coating layer 222 is an area formed between the coating layers 221. The non-coating layer 222 extends in a direction substantially parallel to a direction in which the coating layer 221 extends. In an embodiment, the non-coating layer 222 is an area that does not separately include a resin material, such as a casting polypropylene (CPP) film.

In an embodiment, an electrode plate 250 includes an electrode plate portion 251 and/or a connection portion 252. In an embodiment, the mother plate 200 is cut through a notching process to form the electrode plate 250. At least a portion of the mother plate 200 is cut through a notching process to form the electrode plate 250 in a form that includes the electrode plate portion 251 and the connection portion 252.

In an embodiment, the electrode plate portion 251 is an area formed by cutting a portion of the polar layer 210 from the mother plate 200. The electrode plate portion 251 is illustrated in FIG. 4 as being cut into a rectangular shape, but this is just provided for illustration only and the shape of the electrode plate portion 251 may not be limited thereto.

In an embodiment, the connection portion 252 is an area formed by cutting a portion of the intermediate layer 220 from the mother plate 200. With reference to FIG. 4, a portion of the connection portion 252 according to an embodiment is formed by cutting the coating layer 221. A remaining portion of the connection portion 252 is formed by cutting the non-coating layer 222. The connection portion 252 is illustrated in FIG. 4 as being cut into a rectangular shape, but this is just provided for illustration only and the shape of the connection portion 252 is not limited thereto.

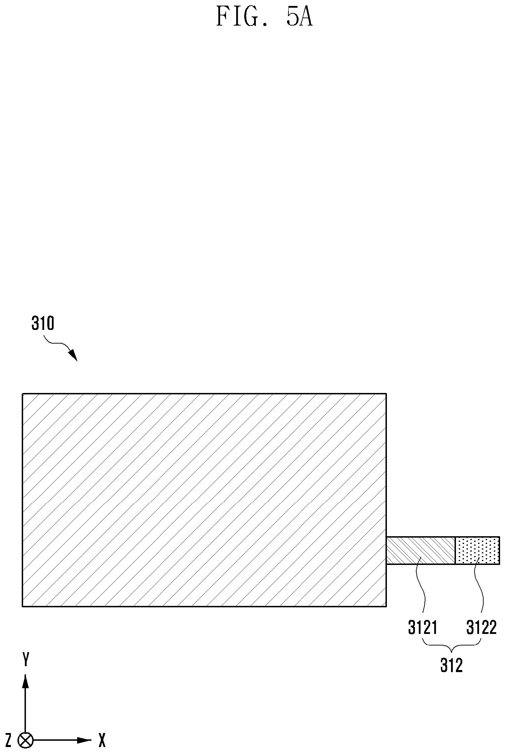

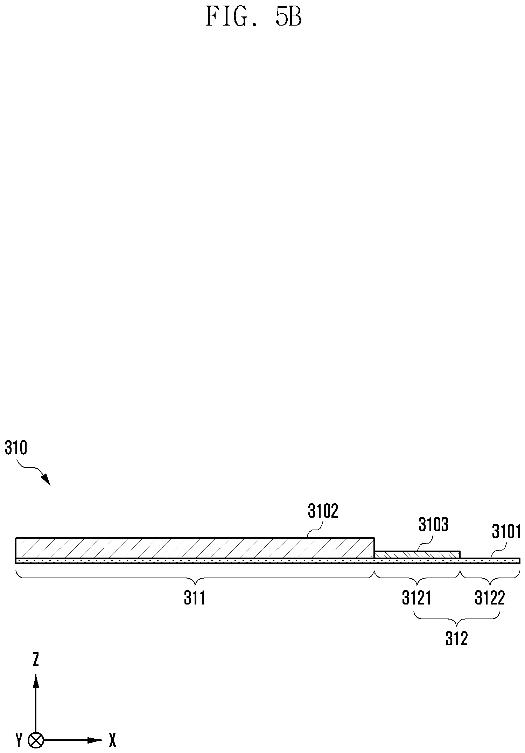

FIG. 5A and FIG. 5B are views illustrating a cathode plate 310 according to an embodiment of the present disclosure.

In the description of the cathode plate 310 according to an embodiment of the present disclosure, a longitudinal direction of the cathode plate 310 means an X-axis direction, and a width direction of the cathode plate 310 means a Y-axis direction. A height direction of the cathode plate 310 means a Z-axis direction.

FIG. 5A is a view of the cathode plate 310 according to an embodiment, viewed in the height direction (e.g., the Z-axis direction). FIG. 5B is a view of the cathode plate 310 according to an embodiment, viewed in the width direction (e.g., the Y-axis direction).

The cathode plate 310 in FIG. 5A and FIG. 5B means the electrode plate 250 illustrated in FIG. 4. For example, a portion of the mother plate 200 in FIG. 4 may be cut through a notching process to form the cathode plate 310.

In an embodiment, the cathode plate 310 includes a first electrode plate portion 311 and/or a first connection portion 312.

With reference to FIG. 5A, the first electrode plate portion 311 according to an embodiment is formed to have a substantially rectangular shape when viewed in the height direction of the cathode plate 310 (e.g., in the Z-axis direction).

The shape of the first electrode plate portion 311 is be limited to a rectangular shape. In an embodiment, the first electrode plate portion 311 is formed to have a shape other than a rectangular shape when viewed in the height direction of the cathode plate 310 (e.g., in the Z-axis direction).

In an embodiment, the first connection portion 312 extends from at least a portion of the first electrode plate portion 311. With reference to FIG. 5A, the first connection portion 312 is formed by extending in a one-sided direction (e.g., in a positive X-axis direction) of the first electrode plate portion 311.

In an embodiment, a width of the first connection portion 312 is formed smaller than a width of the first electrode plate portion 311. The width of the first connection portion 312 means a length that the first connection portion 312 extends in the width direction of the cathode plate 310 (e.g., in the Y-axis direction).

With reference to FIG. 5B, the cathode plate 310 includes a base layer 3101, a polar layer 3102, and/or a coating layer 3103.

In an embodiment, the base layer 3101 of the cathode plate 310 is a layer that includes a cathode base material (e.g., aluminum). In an embodiment, the base layer 3101 means the base plate 205 in FIG. 4 or may be substantially the same as the base plate 205 in FIG. 4.

In an embodiment, the polar layer 3102 of the cathode plate 310 means the polar layer 210 in FIG. 4, or may be substantially the same as the polar layer 210 in FIG. 4. For example, the polar layer 3102 is a layer formed by coating with a cathode active material.

In an embodiment, the polar layer 3102 is disposed on a portion of the base layer 3101. For example, the polar layer 3102 is formed on one surface of the base layer 3101 in the first electrode plate portion 311.

In an embodiment, the coating layer 3103 means the coating layer 221 in FIG. 4 or may be substantially the same as the coating layer 221 in FIG. 4.

In an embodiment, the coating layer 3103 includes a resin material. For example, the coating layer 3103 may include a casting polypropylene (CPP) film.

In an embodiment, the coating layer 3103 is disposed on a portion of the base layer 3101 at a side surface of the polar layer 3102. For example, the coating layer 3103 is formed on one surface of the base layer 3101 at a portion of the first connection portion 312.

With reference to FIG. 5A and FIG. 5B, the first connection portion 312 according to an embodiment includes a first area 3121 and/or a second area 3122.

In an embodiment, the first area 3121 is an area that includes the coating layer 3103.

In an embodiment, the second area 3122 is an area that does not include the coating layer 3103. Since the second area 3122 does not include the coating layer 3103, the base layer 3101 is exposed to the outside. The cathode plate 310 is electrically connected to an external constituent element at the second area 3122.

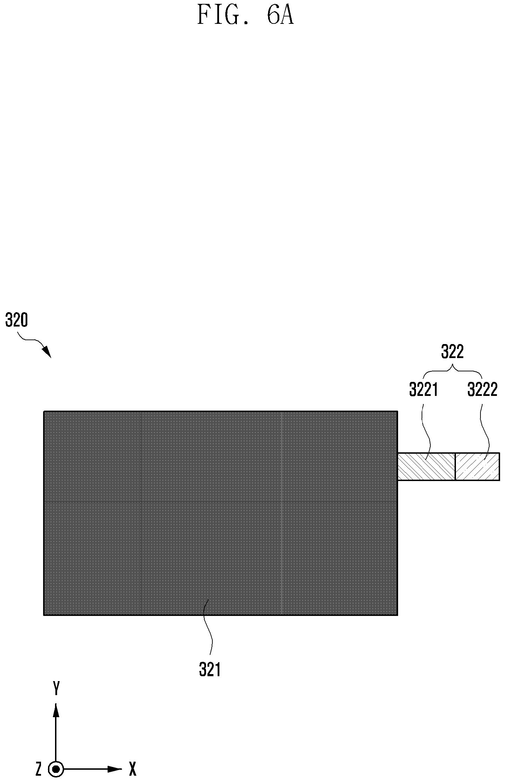

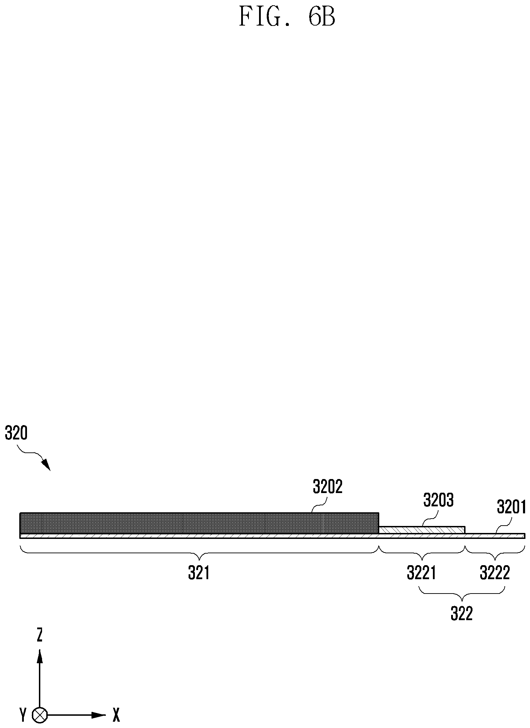

FIG. 6A and FIG. 6B are views illustrating an anode plate 320 according to an embodiment of the present disclosure.

In the description of the anode plate 320 according to an embodiment of the present disclosure, a longitudinal direction of the anode plate 320 means an X-axis direction, and a width direction of the anode plate 320 means a Y-axis direction. A height direction of the anode plate 320 may mean a Z-axis direction.

FIG. 6A is a view of the anode plate 320 according to an embodiment, viewed in the height direction (e.g., the Z-axis direction). FIG. 6B is a view of the anode plate 320 according to an embodiment, viewed in the width direction (e.g., the Y-axis direction).

The anode plate 320 in FIG. 6A and FIG. 6B means the electrode plate 250 illustrated in FIG. 4. For example, a portion of the mother plate 200 in FIG. 4 is cut through a notching process to form the anode plate 320.

In an embodiment, the anode plate 320 includes a second electrode plate portion 321 and/or a second connection portion 322.

With reference to FIG. 6A, the second electrode plate portion 321 according to an embodiment is formed to have a substantially rectangular shape when viewed in the height direction of the anode plate 320 (e.g., in the Z-axis direction).

The shape of the second electrode plate portion 321 is not limited to a rectangular shape. In an embodiment, the second electrode plate portion 321 is formed to have a shape other than a rectangular shape when viewed in the height direction of the anode plate 320 (e.g., in the Z-axis direction).

In an embodiment, the second connection portion 322 extends from at least a portion of the second electrode plate portion 321. With reference to FIG. 6A, the second connection portion 322 is formed by extending in a one-sided direction (e.g., in a positive X-axis direction) of the second electrode plate portion 321.

In an embodiment, a width of the second connection portion 322 is formed smaller than a width of the second electrode plate portion 321. The width of the second connection portion 322 means a length that the second connection portion 322 extends in the width direction of the anode plate 320 (e.g., in the Y-axis direction).

With reference to FIG. 6B, the anode plate 320 includes a base layer 3201, a polar layer 3202, and/or a coating layer 3203.

In an embodiment, the base layer 3201 of the anode plate 320 is a layer that includes an anode base material (e.g., copper). In an embodiment, the base layer 3201 may mean the base plate 205 in FIG. 4 or is substantially the same as the base plate 205 in FIG. 4.

In an embodiment, the polar layer 3202 of the anode plate 320 means the polar layer 210 in FIG. 4, or is substantially the same as the polar layer 210 in FIG. 4. For example, the polar layer 3202 is a layer formed by coating with an anode active material.

In an embodiment, the polar layer 3202 is disposed on a portion of the base layer 3201. For example, the polar layer 3202 is formed on one surface of the base layer 3201 in the second electrode plate portion 321.

In an embodiment, the coating layer 3203 means the coating layer 221 in FIG. 4 or is substantially the same as the coating layer 221 in FIG. 4.

In an embodiment, the coating layer 3203 includes a resin material. For example, the coating layer 3203 may include a casting polypropylene (CPP) film.

In an embodiment, the coating layer 3203 is disposed on a portion of the base layer 3201 at a side surface of the polar layer 3202. For example, the coating layer 3203 is formed on one surface of the base layer 3201 at a portion of the second connection portion 322.

With reference to FIG. 6A and FIG. 6B, the second connection portion 322 according to an embodiment may include a first area 3221 and/or a second area 3222.

In an embodiment, the first area 3221 is an area that includes the coating layer 3203.

In an embodiment, the second area 3222 is an area that does not include the coating layer 3203. Since the second area 3222 does not include the coating layer 3203, the base layer 3201 is exposed to the outside. The anode plate 320 is electrically connected to an external constituent element at the second area 3222.

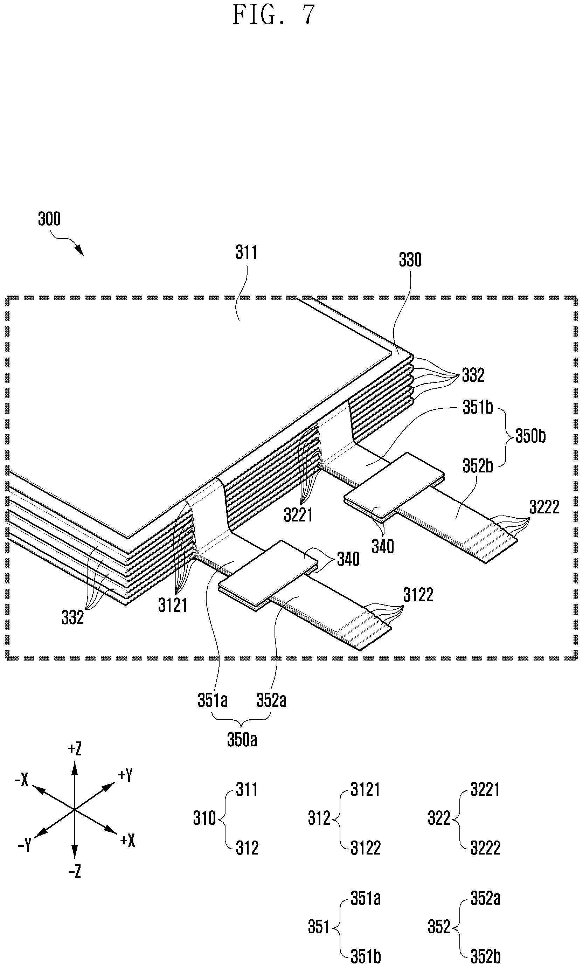

FIG. 7 is a view illustrating an electrode assembly 300 according to an embodiment of the present disclosure.

In the description of the electrode assembly 300 according to an embodiment of the present disclosure, a longitudinal direction of the electrode assembly 300 means an X-axis direction, and a width direction of the electrode assembly 300 means a Y-axis direction. A height direction of the electrode assembly 300 means a Z-axis direction.

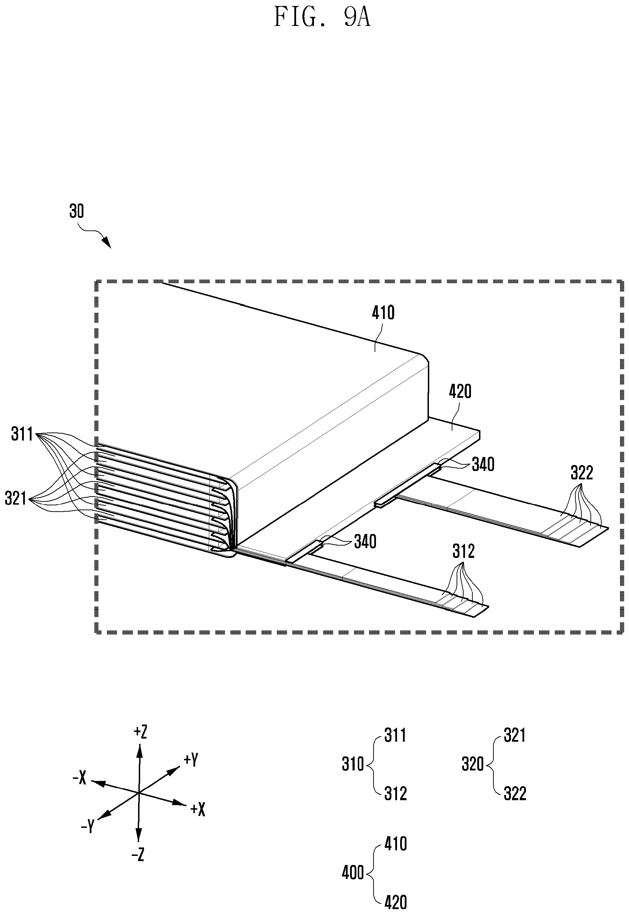

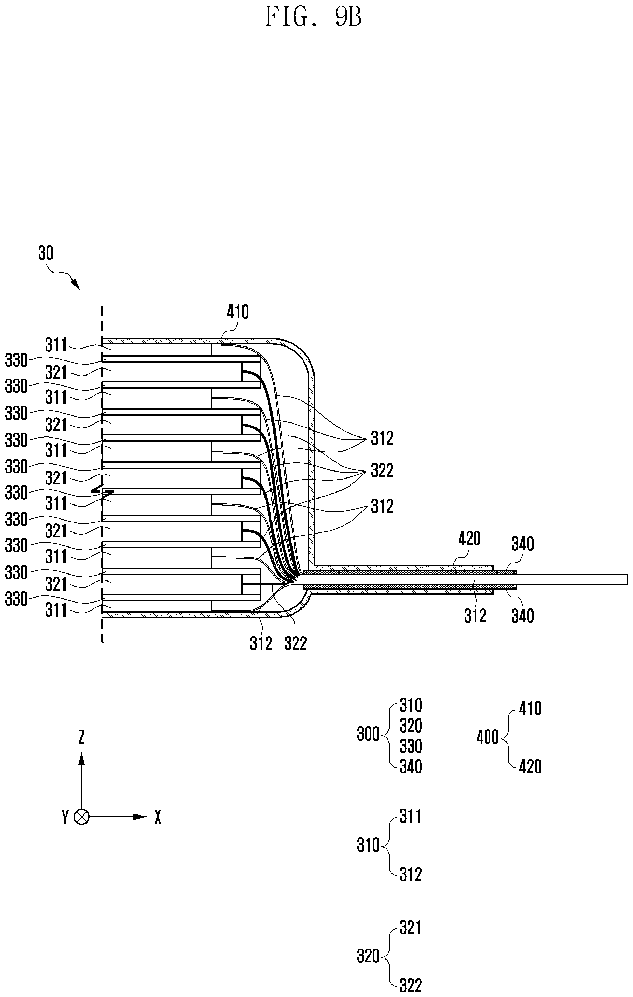

The electrode assembly 300 according to an embodiment of the present disclosure includes the cathode plate 310 (see FIG. 9A), the anode plate 320 (see FIG. 9B), a separator 330, and/or a coating film 340.

In an embodiment, the electrode assembly 300 includes a plurality of cathode plates 310 (see FIG. 9A) and a plurality of anode plates 320 (see FIG. 9B).

In an embodiment, the separator 330 is disposed between the cathode plate 310 (see FIG. 9A) and the anode plate 320 (see FIG. 9B).

In an embodiment, one separator 330 is folded at least in part and positioned between the cathode plate 310 (see FIG. 9A) and the anode plate 320 (see FIG. 9B). For example, with reference to FIG. 7, the separator 330 according to an embodiment is folded in a plurality of folding areas 332. The separator 330 is folded at the folding area 332, and portions of the separator 330 face each other in the height direction of the electrode assembly 300 (e.g., in the Z-axis direction). The cathode plate 310 (see FIG. 9A) or the anode plate 320 (see FIG. 9B) is disposed in a space formed by the folding of the separator 330. The separator 330 according to an embodiment does not include the folding area 332 when constituted by a plurality of separators.

In an embodiment, the cathode plate 310 (see FIG. 9A) and the anode plate 320 (see FIG. 9B) each include the connection portion 312 or 322. For example, the first connection portion 312 extends from a portion of the cathode plate 310 (see FIG. 9A) along a longitudinal direction of the electrode assembly 300 (e.g., along the X-axis direction). The second connection portion 322 extends from a portion of the anode plate 320 (see FIG. 9B) along the longitudinal direction of the electrode assembly 300 (e.g., along the X-axis direction).

In an embodiment, the first connection portion 312 and the second connection portion 322 are formed spaced apart from each other in the width direction (e.g., the X-axis direction) of the electrode assembly 300.

In an embodiment, a plurality of the first connection portions 312 are stacked and disposed in the height direction (e.g., the Z-axis direction) of the electrode assembly 300.

In an embodiment, the first connection portion 312 may include a first area 3121 and/or a second area 3122. A portion of the first area 3121 is bent and extends, and a remaining portion extends in a direction substantially parallel to the longitudinal direction of the electrode assembly 300 (e.g., in the X-axis direction).

In an embodiment, since the first connection portion 312 includes the first area 3121 and/or the second area 3122, the first area 3121 and the second area 3122 are each stacked and disposed in plurality in the height direction (e.g., the Z-axis direction) of the electrode assembly 300.

In an embodiment, the first area 3121 and the second area 3122 of the first connection portion 312 are each stacked and disposed in plurality in the height direction (e.g., the Z-axis direction) of the electrode assembly 300 to form a first connection portion stacked body 350a.

In an embodiment, the first connection portion stacked body 350a includes a (1-1)th stacked body 351a and/or a (1-2)th stacked body 352a.

In an embodiment, the (1-1)th stacked body 351a is a portion in which the first area 3121 of the plurality of first connection portions 312 is stacked in the height direction (e.g., the Z-axis direction) of the electrode assembly 300. The (1-2)th stacked body 352a is a portion in which the second area 3122 of the plurality of first connection portions 312 are stacked in the height direction (e.g., the Z-axis direction) of the electrode assembly 300.

In an embodiment, the second connection portions 322 is stacked and disposed in plurality in the height direction (e.g., the Z-axis direction) of the electrode assembly 300.

In an embodiment, the second connection portion 322 includes the first area 3221 and/or the second area 3222. A portion of the first area 3221 is bent and extend, and a remaining portion extends in a direction substantially parallel to the longitudinal direction of the electrode assembly 300 (e.g., in the X-axis direction).

In an embodiment, since the second connection portion 322 includes the first area 3221 and/or the second area 3222, the first area 3221 and the second area 3222 are each stacked and disposed in plurality in the height direction (e.g., the Z-axis direction) of the electrode assembly 300.

In an embodiment, the first area 3221 and the second area 3222 of the anode plate 320 (see FIG. 9B) are each stacked and disposed in plurality in the height direction (e.g., the Z-axis direction) of the electrode assembly 300 to form a second connection portion stacked body 350b.

In an embodiment, the second connection portion stacked body 350b includes a (2-1)th stacked body 351b and/or a (2-2)th stacked body 352b.

In an embodiment, the (2-1)th stacked body 351b is a portion in which the first area 3221 of the plurality of second connection portions 322 is stacked in the height direction (e.g., the Z-axis direction) of the electrode assembly 300. The (2-2)th stacked body 352b is a portion in which the second area 3222 of the plurality of second connection portions 322 are stacked in the height direction (e.g., the Z-axis direction) of the electrode assembly 300.

In an embodiment, a first stacked body 351 includes the (1-1)th stacked body 351a and/or the (2-1)th stacked body 351b. In an embodiment, a second stacked body 352 includes the (1-2)th stacked body 352a and/or the (2-2)th stacked body 352b.

In an embodiment, the first stacked body 351 is constituted to seal the electrode assembly 300 from the outside. For example, the first stacked body 351 is disposed in a position to overlap an end of the exterior material 400 (see FIG. 9A) and may serve to seal the electrode assembly 300 positioned inside the exterior material 400 (see FIG. 9A) from the outside.

In an embodiment, the first stacked body 351 is an area formed by stacking a portion of the areas of the connection portions 312 and 322 that are positioned inside the exterior material 400 (see FIG. 9A). In an embodiment, the first stacked body 351 is an area that includes the coating layers 3103 and 3203 (see FIGS. 5B and 6B).

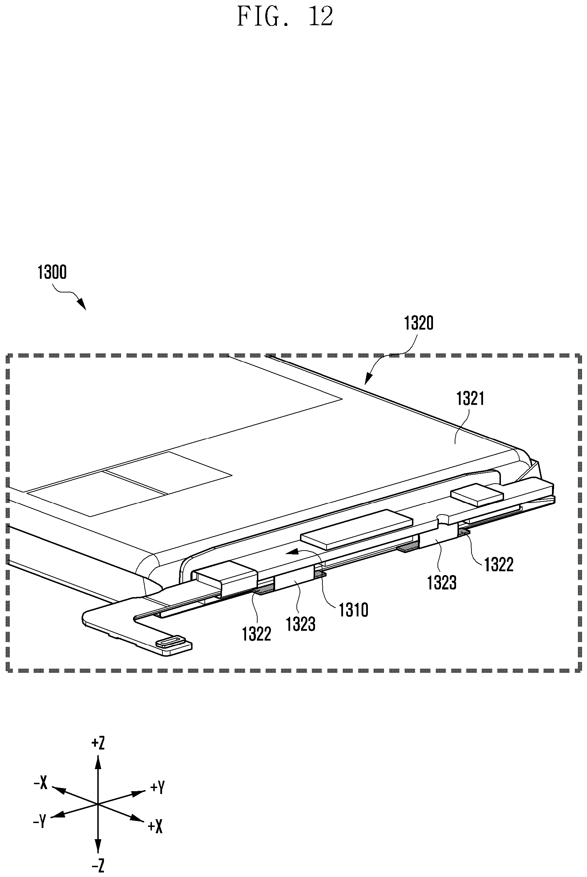

In an embodiment, the second stacked body 352 is constituted for the electrode assembly 300 to be electrically connected to an external constituent element. For example, the electrode assembly 300 is electrically connected to a protection circuit module 1310 (see FIG. 12) at the second stacked body 352.

In an embodiment, the coating film 340 is disposed to at least partially overlap the first stacked body 351 and the second stacked body 352. For example, the coating film 340 is disposed to at least partially overlap a portion where the (1-1)th stacked body 351a and the (1-2)th stacked body 352a meet. The coating film 340 is disposed to at least partially overlap a portion where the second stacked body 351b and the second stacked body 352b meet.

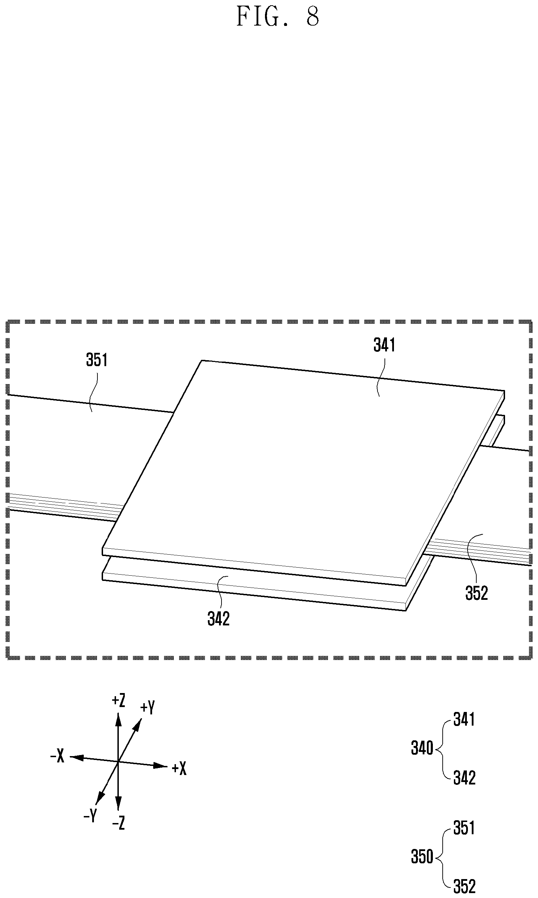

FIG. 8 is a view illustrating the coating film 340 according to an embodiment of the present disclosure.

In an embodiment, the coating film 340 includes a first coating film 341 and/or a second coating film 342.

In an embodiment, a connection portion stacked body 350 includes the first stacked body 351 and/or the second stacked body 352.

In an embodiment, the connection portion stacked body 350 means the first connection portion stacked body 350a (see FIG. 7) or the second connection portion stacked body 350b (see FIG. 7).

In an embodiment, the first stacked body 351 means the (1-1)th stacked body 351a (see FIG. 7) or the (2-1)th stacked body 351b (see FIG. 7). In an embodiment, the second stacked body 352 means the (1-2)th stacked body 352a (see FIG. 7) or the (2-2)th stacked body 352b (see FIG. 7).

In an embodiment, the first stacked body 351 is disposed at a portion where at least a portion of the first stacked body 351 overlaps an end of the exterior material 400 (see FIG. 9A) and serves to seal the interior of the exterior material 400 (see FIG. 9A) from the outside. In an embodiment, the first stacked body 351 includes the coating layers 3103 and 3203 (see FIG. 5B and FIG. 6B).

In an embodiment, one surface of the connection portion stacked body 350 means a surface of the connection portion stacked body 350 facing in a positive Z-axis direction. The other surface of the connection portion stacked body 350 means a surface of the connection portion stacked body 350 facing in a negative Z-axis direction.

In an embodiment, the first coating film 341 is disposed on one surface of the connection portion stacked body 350. For example, the first coating film 341 is disposed at a position that overlaps a portion where one surface of the first stacked body 351 and one surface of the second stacked body 352 meet.

In an embodiment, the second coating film 342 is disposed on the other surface of the connection portion stacked body 350. In an embodiment, the second coating film 342 is disposed at a position that overlaps a portion where the other surface of the first stacked body 351 and the other surface of the second stacked body 352 meet.

In an embodiment, the coating film 340 includes a resin material. For example, the coating layer 3203 may include a casting polypropylene (CPP) film.

In an embodiment, the coating film 340 is constituted to seal the electrode assembly 300 from the outside. The coating film 340 is disposed at a position to overlap an end of the exterior material 400 (see FIG. 9A) on one surface and the other surface of the first stacked body 351 and seals the electrode assembly 300 positioned inside the exterior material 400 (see FIG. 9A) from the outside.

In FIG. 8, the first coating film 341 and the second coating film 342 are illustrated as being positioned spaced apart, but the first coating film 341 and the second coating film 342 are connected to each other at least in part. For example, the first coating film 341 is connected to the second coating film 342 on one side (e.g., a side surface in a negative Y-axis direction) and the other side (e.g., a side surface in a positive Y-axis direction). The first coating film 341 and the second coating film 342 are connected to each other and surround at least a portion of the first stacked body 351 and the second stacked body 352.

In an embodiment, the coating film 340 and the first stacked body 351 or the second stacked body 352 are coupled through a thermal fusion process. The coating film 340 and the first stacked body 351 or the second stacked body 352 re coupled to form a sealant that seals the electrode assembly 300 positioned inside the exterior material 400 (see FIG. 9A) from the outside.

In FIG. 8, the coating film 340 is illustrated as being disposed on one surface and the other surface of the first stacked body 351 or the second stacked body 352, but the position in which the coating film 340 is disposed may not be limited thereto. For example, the coating film 340 may be disposed inside the first stacked body 351 or the second stacked body 352 (e.g., between a plurality of first areas 3121 and 3221 that form the first stacked body 351).

FIG. 9A and FIG. 9B are views illustrating a battery 30 according to an embodiment of the present disclosure.

In the description of the battery 30 according to an embodiment of the present disclosure, a longitudinal direction of the battery 30 means an X-axis direction, and a width direction of the battery 30 means a Y-axis direction. A height direction of the battery 30 means a Z-axis direction.

FIG. 9A is a cross-sectional perspective view illustrating the battery 30 according to an embodiment. FIG. 9B is a view of the battery 30 illustrated in FIG. 9A, viewed in the width direction of the battery 30 (e.g., in the Y-axis direction).

With reference to FIG. 9A and FIG. 9B, the battery 30 according to an embodiment of the present disclosure includes the electrode assembly 300 and/or the exterior material 400.

In an embodiment, at least a portion of the electrode assembly 300 is disposed inside the exterior material 400.

In an embodiment, the electrode assembly 300 includes the cathode plate 310, the anode plate 320, the separator 330, and/or the coating film 340.

With reference to FIG. 9B, the separator 330 is at least partially disposed between the first electrode plate portion 311 of the cathode plate 310 and the second electrode plate portion 321 of the anode plate 320.

In an embodiment, the cathode plate 310, separator 330, and anode plate 320 are at least partially stacked in the height direction of the battery 30 (e.g., in the Z-axis direction). For example, in the following order, the first electrode plate portion 311 of the cathode plate 310, the separator 330, the second electrode plate portion 321 of the anode plate 320, the separator 330, the first electrode plate portion 311 of the cathode plate 310, the separator 330, and the second electrode plate portion 321 of the anode plate 320 are stacked in the height direction of the electrode assembly 300.

In an embodiment, the exterior material 400 includes a body portion 410 and/or a sealing portion 420.

In an embodiment, the body portion 410 is an area of the exterior material 400 that surrounds the first electrode plate portion 311 of the cathode plate 310, the second electrode plate portion 321 of the anode plate 320, and the separator 330.

In an embodiment, the body portion 410 is an area of the exterior material 400 that surrounds the first electrode plate portion 311 of the cathode plate 310, the second electrode plate portion 321 of the anode plate 320, at least a portion of the first areas 3121 and 3221 of the connection portion 312, or at least a portion of the stacked body 351 (see FIG. 7).

In an embodiment, the sealing portion 420 is an area extending from the body portion 410. The sealing portion 420 is an area formed at an end of the exterior material 400 (e.g., an end of the exterior material 400 in the X-axis direction). A portion of the electrode assembly 300 extends to the outside of the exterior material 400 through the sealing portion 420.

In an embodiment, an end of the exterior material 400 overlaps the connection portions 312 and 322 at least in part. For example, with reference to FIG. 9A and FIG. 9B, the sealing portion 420 of the exterior material 400 is formed to overlap the first connection portion 312 of the cathode plate 310 and the second connection portion 322 of the anode plate 320 at least in part.

In an embodiment, the coating film 340 is disposed at a position to overlap the sealing portion 420 of the exterior material 400. With reference to FIGS. 9A and 9B, the coating film 340 is disposed on the inside of the sealing portion 420.

In an embodiment, the coating film 340 further extends in the longitudinal direction (e.g., in the X-axis direction) of the battery 30 relative to an end of the sealing portion 420.

In an embodiment, the coating film 340 is coupled to the plurality of connection portions 312 and 322 through a thermal fusion process. The coating film 340 is coupled to the plurality of connection portions 312 and 322 through a thermal fusion process to form a sealant.

In an embodiment, the coating film 340 is formed at a position in which the coating film 340 overlaps the sealing portion 420 of the exterior material 400, and at least a portion of the battery 30 is sealed. For example, since the coating film 340 is disposed to be in contact with the sealing portion 420 in a position where the coating film 340 overlaps the sealing portion 420, an area of the battery 30 that is positioned inside the body portion 410 of the exterior material 400 is sealed without being exposed to the outside.

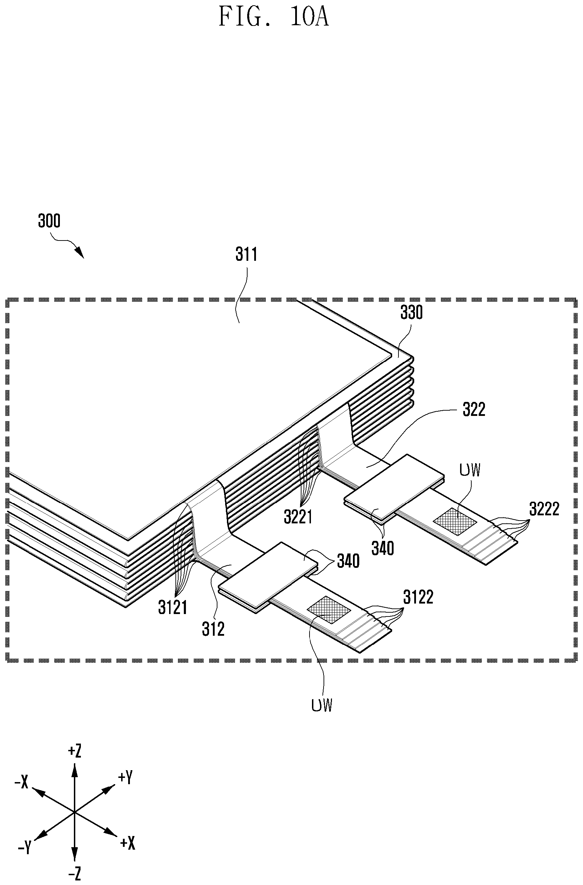

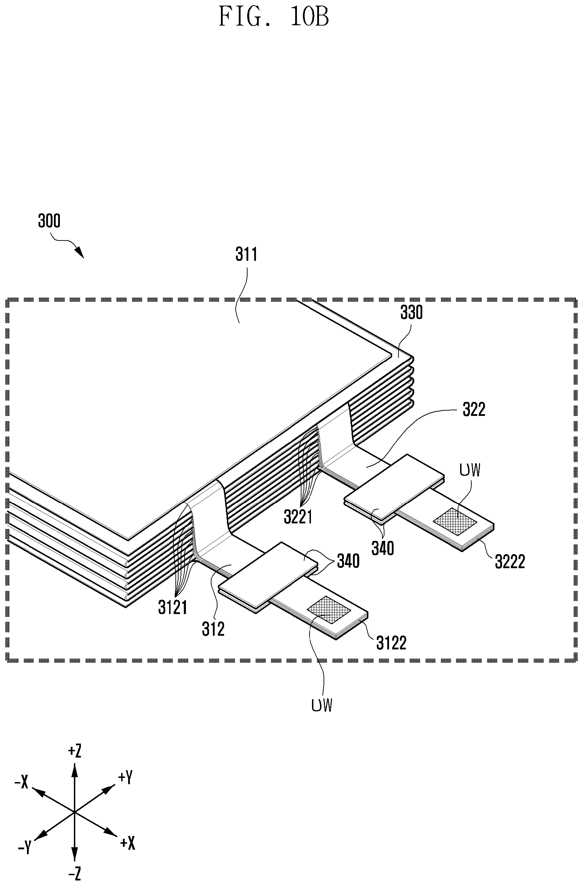

FIG. 10A and FIG. 10B are views illustrating the electrode assembly 300 according to an embodiment of the present disclosure.

FIG. 10A is a view illustrating a state before a cutting process is performed on the electrode assembly 300. FIG. 10B is a view illustrating a state after the cutting process has been performed on the electrode assembly 300.

In an embodiment, the electrode assembly 300 is formed with different positions of the ends before the cutting process is performed on the electrode assembly 300. For example, with reference to FIG. 10A, the positions of the second areas 3122 and 3222 of the connection portions 312 and 322 are formed differently.

In an embodiment, since the electrode assembly 300 is formed by stacking the plurality of cathode plates 310 (see FIG. 5A) and the plurality of anode plates 320 (see FIG. 6A) that have substantially the same shape, the positions of the ends of the connection portions 312 and 322 are formed differently depending on the positions in which the cathode plates 310 (see FIG. 5A) and the anode plates 320 (see FIG. 6A) are disposed. For example, since a degree of bending and extension of the first connection portion 312 varies depending on the position in which the cathode plate 310 (see FIG. 5A) is disposed with respect to the positive Z-axis direction in the electrode assembly 300, the position of the end of the first connection portion 312 is formed differently. Since the cathode plate 310 (see FIG. 5A) that is positioned relatively high in the positive Z-axis direction in the electrode assembly 300 has a relatively large amount of bending and extension of the first connection portion 312, the position of the end of the second area 3122 is formed to be shorter in the positive X-axis direction compared to the first connection portion 312 of other cathode plates 310 (see FIG. 5A).

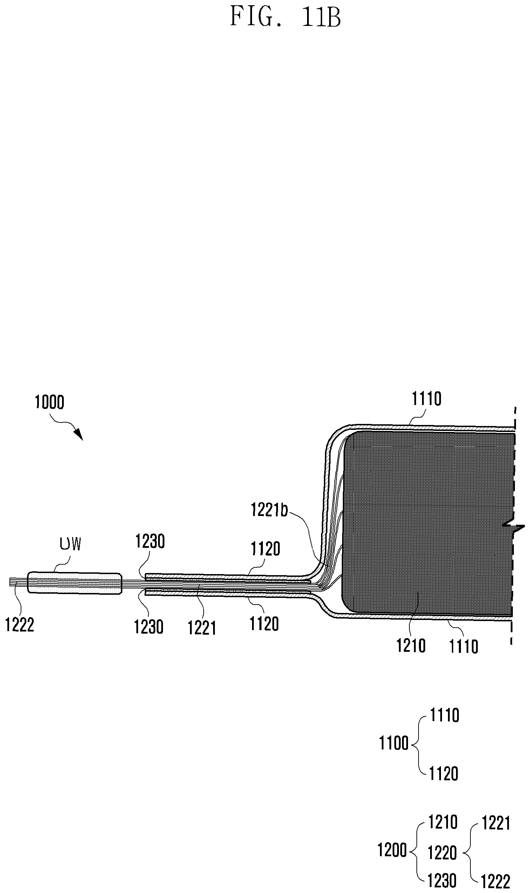

In an embodiment, when a cutting process is performed on the electrode assembly 300, the positions of the ends of the electrode assembly 300 are formed to be substantially the same. For example, with reference to FIG. 11B, the positions of the ends of the second areas 3122 and 3222 of the connection portions 312, 322 are formed substantially the same.

In an embodiment, when a cutting process is performed on the electrode assembly 300 so that the positions of the ends of the second areas 3122 and 3222 are formed substantially the same, it is easier for an external constituent element (e.g., the protection circuit module 1310, see FIG. 12) to be connected to the second areas 3122 and 3222.

With reference to FIG. 10A and FIG. 10B, the plurality of second areas 3122 and 3222 stacked in the height direction (e.g., the Z-axis direction) of the electrode assembly 300 according to an embodiment are physically coupled to each other and electrically connected through ultrasonic welding (UW). Since the second areas 3122 and 3222 of the electrode assembly 300 according to an embodiment are positioned on the outside of the exterior material 400 (see FIG. 9A), the ultrasonic welding (UW) is performed on the outside of the exterior material 400 (see FIG. 9A).

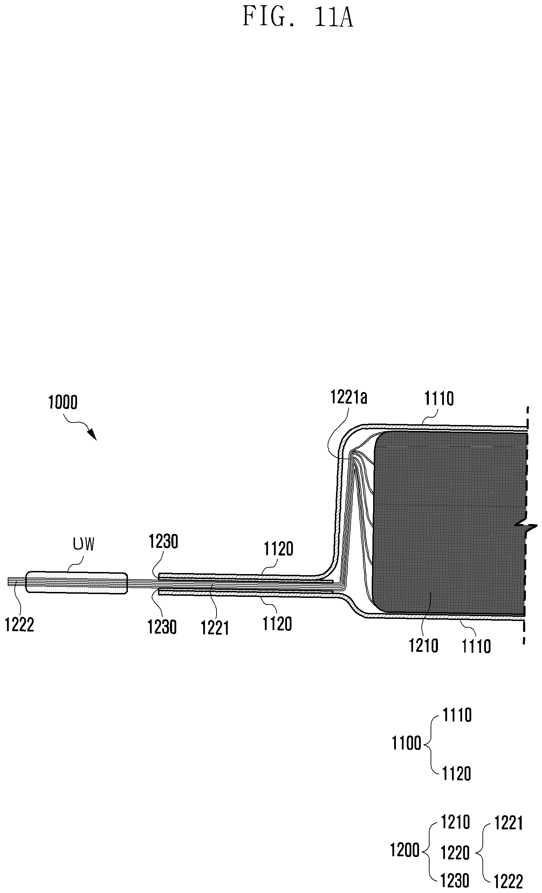

FIG. 11A and FIG. 11B are views illustrating a battery 1000 according to an embodiment of the present disclosure.

The battery 1000 according to an embodiment of the present disclosure means the battery 30 illustrated in FIG. 9A and FIG. 9B, or includes at least some of the constituent elements of the battery 30.

The battery 1000 according to an embodiment of the present disclosure includes an exterior material 1100 and/or an electrode assembly 1200.

In an embodiment, the exterior material 1100 includes a body portion 1110 and/or a sealing portion 1120.

In an embodiment, the electrode assembly 1200 includes an electrode plate stacked body 1210, a connection portion stacked body 1220, and/or a coating film 1230.

In an embodiment, the electrode plate stacked body 1210 means a constitution in which the first electrode plate portion 311, the second electrode plate portion 312, and/or the separator 330 illustrated in FIG. 9B are stacked and formed.

In an embodiment, the connection portion stacked body 1220 means a constitution in which the connection portions 312 and 322 illustrated in FIG. 7 are stacked in plurality and formed.

In an embodiment, the coating film 1230 is substantially the same as the coating film 340 illustrated in FIG. 7.

In an embodiment, at least a portion of the electrode assembly 1200 is disposed inside the exterior material 1100. For example, the electrode plate stacked body 1210 is disposed inside the body portion 1110 of the exterior material 1100.

In an embodiment, the sealing portion 1120 of the exterior material 1100 is formed to surround at least a portion of the electrode assembly 1200. For example, at least a portion of the connection portion stacked body 1220 is surrounded by the sealing portion 1120 of the exterior material 1100.

In an embodiment, the connection portion stacked body 1220 includes a first stacked body 1221 and/or a second stacked body 1222.

In an embodiment, the first stacked body 1221 is an area that includes the coating layers 3103 and 3203 in FIG. 5B and FIG. 6B. For example, the first stacked body 1221 is formed by stacking the plurality of first areas 3121 and 3221 that include the coating layers 3103 and 3203 in FIG. 5B and FIG. 6B. The first stacked body 1221 is at least partially surrounded by the sealing portion 1120.

In an embodiment, the second stacked body 1222 is an area that does not include the coating layers 3103 and 3203 in FIG. 5B and FIG. 6B. For example, the second stacked body 1222 is formed by stacking the second areas 3122 and 3222 in FIG. 5B and FIG. 6B in plurality. The second stacked body 1222 is an area positioned on the outside of the sealing portion 1120.

In an embodiment, the second stacked body 1222 has each layer therein physically coupled and electrically connected to each other through ultrasonic welding (UW).

In the electrode assembly 1200 according to an embodiment, the ultrasonic welding (UW) that connects each layer inside the second stacked body 1222 is performed on the outside of the exterior material 1100. In the electrode assembly 1200 according to an embodiment, the ultrasonic welding (UW) is possible before the disposition of the electrode assembly 1200 on the exterior material 1100 or after the disposition of the electrode assembly 1200 on the exterior material 1100.

Since the ultrasonic welding (UW) is performed on the outside of the exterior material 1100 in the electrode assembly 1200 according to an embodiment, the generation of debris from the ultrasonic welding (UW) inside the exterior material 1100 is prevented or reduced.

In an embodiment, the coating film 1230 is disposed in a position to overlap the sealing portion 1120. For example, the coating film 1230 is positioned on the inside of the sealing portion 1120. The coating film 1230 is in contact with the sealing portion 1120 on the inside of the sealing portion 1120.

In an embodiment, the first stacked body 1222 and coating film 1230 are disposed to overlap the sealing portion 1120 of the exterior material 1100, and the exterior material 1100 is sealed. The first stacked body 1222 and coating film 1230 includes a resin material (e.g., a CPP coating layer) so that the interior of the exterior material 1100 is distinct from the exterior thereof. The exterior material 1100 is sealed, and leakage of materials constituting the electrode plate stacked body 1210 to the outside, or introduction of external materials into the electrode plate stacked body 1210, is prevented or reduced.

With reference to FIG. 11A, the first stacked body 1221 according to an embodiment may include a bent area 1221a. In an embodiment, the bent area 1221a is an area where the first stacked body 1221 extending from the electrode plate stacked body 1210 is bent at least in part.

When the first stacked body 1221 includes the bent area 1221a, breakage of the connection portion stacked body 1220 due to an external impact applied to the battery 1000 is prevented or reduced. When the battery 1000 is subjected to an external impact, the connection portion stacked body 1220 is pulled in one direction (e.g., in a direction away from the electrode plate stacked body 1210), and the connection portion stacked body 1220 is broken. According to an embodiment, since the first stacked body 1221 including the bent area 1221a is bent and extends at least in part to have a length formed to be relatively longer, breakage of the connection portion stacked body 1220 is prevented or reduced even if the connection portion stacked body 1220 is pulled in one direction.

With reference to FIG. 11B, the first stacked body 1221 according to an embodiment includes a connection area 1221b. In an embodiment, the connection area 1221b is an area where the first stacked body 1221 extending from the electrode plate stacked body 1210 is not bent and extends in one direction. According to an embodiment, the connection area 1221b is formed with a relatively short length compared to the bent area 1221a.

When the first stacked body 1221 according to an embodiment includes the connection area 1221b and does not include the bent area 1221a, the energy density of the battery 1000 increases, or the thickness of the battery 1000 may be formed thinner. For example, an additional space inside the battery 1000 may be provided as large as a space where the bent area 1221a is omitted, thereby increasing the energy density of the battery 1000. Alternatively, the thickness of the battery 1000 may be formed to be as thin as the space where the bent area 1221a is omitted.

FIG. 12 is a view illustrating an electronic device 1300 according to an embodiment of the present disclosure.

In the description of the electronic device 1300 according to an embodiment of the present disclosure, a longitudinal direction of the electronic device 1300 means an X-axis direction, and a width direction of the electronic device 1300 means a Y-axis direction. A height direction of the electronic device 1300 means a Z-axis direction.

The electronic device 1300, according to an embodiment of the present disclosure, includes a protection circuit module 1310 and/or a battery 1320.

The battery 1320 according to an embodiment means the battery 30 illustrated in FIG. 9A and FIG. 9B, or may include at least some of the constituent elements of the battery 30.

In an embodiment, the protection circuit module 1310 blocks or reduces overcharging, overdischarging, and/or overcurrent of the battery 1320 to serve to protect the battery 1320.

In an embodiment, the battery 1320 includes an exterior material 1321, a coating portion 1322, and/or a connection portion 1323.

In an embodiment, the exterior material 1321 means the exterior material 400 in FIG. 9A, or may include at least some of the constituent elements of the exterior material 400. In an embodiment, the coating portion 1322 means the coating film 340 in FIG. 8, or may include at least some of the constituent elements of the coating film 340. In an embodiment, the connection portion 1323 means the second stacked body 352 in FIG. 8, or may include at least some of the constituent elements of the second stacked body 352.

In an embodiment, the exterior material 1321 of the battery 1320 serves to surround the internal constitution of the battery 1320. In an embodiment, the coating portion 1322 of the battery 1320 serves to seal the interior of the battery 1320 from the exterior.

In an embodiment, the connection portion 1323 of the battery 1320 serves to connect the battery 1320 to an external constitution. For example, the battery 1320 may be in contact with at least a portion of the protection circuit module 1310 at the connection portion 1323. In an embodiment, the connection portion 1323 is electrically connected to the protection circuit module 1310.

The electronic device 1300, according to an embodiment of the present disclosure, includes the protection circuit module 1310 and the battery 1320 or 30 electrically connected to the protection circuit module 1310.

The battery 30, according to an embodiment of the present disclosure, includes the electrode assembly 300, which includes the plurality of cathode plates 310, the plurality of anode plates 320, and the separator 330 disposed in at least a portion between the cathode plates 310 and the anode plates 320, and the exterior material 400 surrounding at least a portion of the electrode assembly 300.

In an embodiment, the cathode plate 310, the anode plate 320, and the separator 330 are stacked in the height direction of the battery 30.

Each of the plurality of cathode plates 310 and each of the plurality of anode plates 320, according to an embodiment of the present disclosure, include the electrode plate portion 311 or 321, which includes the base layer 3101 or 3201 and the polar layer 3102 or 3202, and the connection portions 312 or 322 extending from the base layer 3101 or 3201 of the electrode plate portion 311 or 321, in which the connection portion 312 or 322 includes the first area 3121 or 3221 disposed to overlap an end of the exterior material 400 at least in part to be in contact with the polar layer 3102 or 3202 and including the coating layer 3103 or 3203 formed on one surface of the base layer 3101 or 3201, and the second area 3122 or 3222 including the base layer 3101 or 3201 extending from the first area 3121 or 3221 and electrically connected to the protection circuit module 1310.

In an embodiment, the first areas 3121 and 3221 and the second areas 3122 and 3222 are stacked in plurality to form the connection portion stacked body 350, and the electrode assembly 300 may include the first coating film 341 disposed on one surface of the connection portion stacked body 350 and the second coating film 342 disposed on the other surface that is opposite to one surface of the connection portion stacked body 350, and the first coating film 341 and the second coating film 342 are connected to each other at least in part.

In an embodiment, the coating layers 3103 and 3203, the first coating film 341 and the second coating film 342 are coupled to each other through a thermal fusion process.

In an embodiment, the exterior material 400 includes the sealing portion 420 extending to protrude in the longitudinal direction of the battery 30, and the sealing portion 420 is formed to overlap the first areas 3121 and 3221.

In an embodiment, the coating film 340 is included as being disposed between the plurality of first areas 3121 and 3221 that are stacked in the height direction of the battery 30.

In an embodiment, the plurality of second areas 3122 and 3222, which are stacked in the height direction of the battery 30, are electrically connected through ultrasonic welding.

In an embodiment, the connection portion of the cathode plate 310 is the first connection portion 312 and the connection portion of the anode plate 320 is the second connection portion 322, and the first connection portion 312 and the second connection portion 322 are formed spaced apart from each other in the width direction of the battery 30.

In an embodiment, the cathode plate 310 and the anode plate 320 are each manufactured by cutting the mother plate 200, which includes the base layer 3101 or 3201, the polar layer 3102 or 3202, and the coating layer 3103 or 3203, through a notching process.

In an embodiment, the cathode plate 310 and the anode plate 320 are each manufactured through processes of coating the polar material 201 on at least a portion of the base layer 3101 or 3201 to form the polar layers 210, 3102, or 3202, and forming the coating layer 221, 3103, or 3203 extending parallel to the polar layer 210, 3102, or 3202 on a side surface of the polar layer 210, 3102, or 3202.

In an embodiment, the coating layers 221, 3103, and 3203 are coated along a direction perpendicular to a direction in which the connection portions 312 and 322 extend.

In an embodiment, the plurality of second areas 3122 and 3222 stacked in the height direction of the battery 30 are formed with the same position of the ends.

In an embodiment, the coating layers 221, 3103, and 3203 include a casting polypropylene (CPP) film.

In an embodiment, the plurality of first areas 3121 and 3221 that are stacked in the height direction of the battery 30 form the first stacked body 1221, and the first stacked body 1221 includes the bent area 1221a that is bent and extends at least in part.

The battery 30, according to an embodiment of the present disclosure, includes the electrode assembly 300, which includes the plurality of cathode plates 310 and the plurality of anode plates 320, and a pouch 400 that surrounds at least a portion of the electrode assembly 300.

In an embodiment, each cathode plate 310 and each anode plate 320 is separated by the separator 330 and alternately stacked relative to each other.

In an embodiment, each of the plurality of cathode plates 310 and each of the plurality of anode plates 320 includes the electrode plate portion 311 or 321, which includes the base layer 3101 or 3201 and the polar layer 3102 or 3202, and the connection portion 312 or 322 extending from the base layer 3101 or 3201 of the electrode plate portion 311 or 321, in which the connection portion 312 or 322 may include the coating layer 3103 or 3203 formed on one surface of the base layer 3101 or 3201 to be in contact with the polar layer 3102 or 3202, and includes the first area 312 or 322 disposed to at least partially overlap at an end area of the pouch 400 and the second area 312 or 322 extending from the first area 312 or 322 and electrically connected to the protection circuit module 1310.

In an embodiment, the connection portions 312 and 322 of the plurality of electrode plates (e.g., the cathode plate 310 and the anode plate 320) are stacked in plurality to form the connection portion stacked body 350, and the electrode assembly 300 further includes the first coating film 341 disposed on one surface of the connection portion stacked body 350 and the second coating film 342 disposed on the other surface that is opposite to one surface of the connection portion stacked body 350, and the first coating film 341 and the second coating film 342 are connected to each other at least in part.

In an embodiment, the pouch 400 includes the sealing portion 420 extending to protrude in the longitudinal direction of the battery 30, and the sealing portion 420 are formed to overlap the first areas 3121 and 3221.

The electronic device 1300, according to an embodiment of the present disclosure, includes the protection circuit module 1310 and the battery 30 electrically connected to the protection circuit module 1310, in which the battery 30 includes the electrode assembly 300, which includes the plurality of cathode plates 310 and the plurality of anode plates 320, and the pouch 400 surrounding at least a portion of the electrode assembly 300, in which each of the cathode plates 310 and each of the anode plates 320 are separated by the separator 330 and alternately stacked relative to each other, in which each of the plurality of cathode plates 310 and each of the plurality of anode plates 320 include the electrode plate portion 311 or 321, which includes the base layer 3101 or 3201 and the polar layer 3102 or 3202, and a connection portion 312 or 322 extending from the base layer 3101 or 3201 of the electrode plate portion 311 or 321, in which the connection portion 312 or 322 includes the first area 3121 or 3221 including the coating layer 3103 or 3203 formed on one surface of the base layer 3101 or 3201 to be in contact with the polar layer 3102 or 3202 and disposed to at least partially overlap an end area of the pouch 400, and the second area 312 or 3222 extending from the first area 3121 or 3221 and electrically connected to the protection circuit module 1310.

An electronic device according to an embodiment of the present disclosure may be one of various types of electronic devices. The electronic device may include, for example, a portable communication device (e.g., a smartphone), a computer device, a portable multimedia device, a portable medical device, a camera, a wearable device, or a home appliance. The electronic device according to the embodiment of the present disclosure is not limited to the above-mentioned devices.

An embodiment of the present document and the terms used in the embodiment are not intended to limit the technical features disclosed in the present disclosure to the particular embodiments and should be understood as including various alterations, equivalents, or alternatives of the corresponding embodiments. In connection with the description of the drawings, the same or similar reference numerals may be used for the similar components. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

The term "module" used in an embodiment of the present disclosure may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to the embodiment, the module may be implemented in a form of an application-specific integrated circuit (ASIC).

An embodiment as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke and execute at least one of the one or more instructions stored in the storage medium. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to the embodiment, a method according to various embodiments of the present disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORETM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each constituent element (e.g., module or program), among the above-mentioned constituent elements, may include a single object or a plurality of objects, and some of the plurality of objects may be disposed separately in different constituent elements. According to various embodiments, one or more constituent elements, among the above-mentioned constituent elements, or operations may be omitted, or one or more other constituent elements or operations may be added. Alternatively or additionally, a plurality of components (e.g., modules or programs) may be integrated into a single component. In this case, the integrated component may perform one or more functions of each of the plurality of components in the same or similar manner as they are performed by a corresponding one of the plurality of components before the integration.

According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a protection circuit module (1310);
and a battery (30) electrically connected to the protection circuit module (1310),
wherein the battery (30) includes:
an electrode assembly (300) including a plurality of cathode plates (310), a plurality of anode plates (320), and a separator (330) disposed in at least a portion between the cathode plates (310) and the anode plates (320); and
an exterior material (400) surrounding at least a portion of the electrode assembly (300),
wherein each of the plurality of cathode plates (310) and each of the plurality of anode plates (320) include:
an electrode plate portion (311 or 321) including a base layer (3101 or 3201) and a polar layer (3102 or 3202); and
a connection portion (312 or 322) extending from the base layer (3101 or 3201) of the electrode plate portion (311 or 321), and
wherein the connection portion (312 or 322) includes:
a first area (3121 or 3221) disposed to overlap an end of the exterior material (400) at least in part to be in contact with the polar layer (3102 or 3202), and including a coating layer (221, 3103, or 3203) formed on one surface of the base layer (3101 or 3201); and
a second area (3122 or 3222) including the base layer (3101 or 3201) extending from the first area (3121 or 3221), and electrically connected to the protection circuit module (1310).

2. The electronic device of claim 1, wherein the first area and the second area are stacked to form a connection portion stacked body (350),
wherein the electrode assembly further includes:
a first coating film (341) disposed on one surface of the connection portion stacked body; and
a second coating film (342) disposed on the other surface, which is an opposite surface of the one surface of the connection portion stacked body, and
wherein the first coating film and the second coating film are connected to each other, at least in part.

3. The electronic device of claim 2, wherein the coating layer, the first coating film, and the second coating film are coupled to each other through a thermal fusion process.

4. The electronic device of any preceding claim, wherein the exterior material includes a sealing portion (420) extending to protrude in a longitudinal direction of the battery, and
wherein the sealing portion is formed to overlap the first area.

5. The electronic device of any preceding claim, further comprising:
a coating film (340) stacked in a height direction of the battery and disposed between the plurality of first areas.

6. The electronic device of any preceding claim, wherein the plurality of second areas stacked in a height direction of the battery are electrically connected through ultrasonic welding.

7. The electronic device of any preceding claim, wherein the connection portion of the cathode plate is a first connection portion (312) and the connection portion of the anode plate is a second connection portion (322), and
wherein the first connection portion and the second connection portion are formed spaced apart from each other in a width direction of the battery.

8. A battery (30) comprising:
an electrode assembly (300) including a plurality of cathode plates (310) and a plurality of anode plates (320); and
a pouch (400) surrounding at least a portion of the electrode assembly (300),
wherein each of the cathode plates (310) and each of the anode plates (320) are separated by a separator (330) and alternately stacked relative to each other,
wherein each of the plurality of cathode plates (310) and each of the plurality of anode plates (320) includes:
an electrode plate portion (311 or 321), including a base layer (3101 or 3201) and a polar layer (3102 or 3202); and
a connection portion (312 or 322) extending from the base layer (3101 or 3201) of the electrode plate portion (311 or 321), and
wherein the connection portion (312 or 322) includes:
a first area (3121 or 3221) including a coating layer (3103 or 3203) formed on one surface of that base layer (3101 or 3201) to be in contact with the polar layer (3102 or 3202), and disposed to overlap at least a portion of an end area of the pouch (400); and
a second area (3122 or 3222) extending from the first area (3121 or 3221) and electrically connected to a protection circuit module.

9. The battery of claim 8, wherein the plurality of cathode plates and the connection portion are stacked in plurality to form a connection portion stacked body (350),
wherein the electrode assembly further includes:
a first coating film (341) disposed on one surface of the connection portion stacked body; and
a second coating film (342) disposed on the other surface, which is an opposite surface of the one surface of the connection portion stacked body, and
wherein the first coating film and the second coating film are connected to each other, at least in part.

10. The battery of claim 9, wherein the coating layer, the first coating film, and the second coating film are coupled to each other through a thermal fusion process.

11. The battery of any one of claims 8 to 10, wherein the pouch includes a sealing portion (420) extending to protrude in a longitudinal direction of the battery, and
wherein the sealing portion is formed to overlap the first area.

12. The battery of any one of claims 8 to 11, further comprising:
a coating film (340) stacked in a height direction of the battery and disposed between the plurality of first areas.

13. The battery of any one of claims 8 to 12, wherein the plurality of second areas stacked in a height direction of the battery are electrically connected through ultrasonic welding.

14. The battery of any one of claims 8 to 13, wherein the connection portion of the cathode plate is a first connection portion (312) and the connection portion of the anode plate is a second connection portion (322), and
wherein the first connection portion and the second connection portion are formed spaced apart from each other in a width direction of the battery.

15. The electronic device of any one of claims 1 to 7,
wherein each of the cathode plates (310) and each of the anode plates (320) are separated by a separator (330) and alternately stacked relative to each other.
